# EUROPEAN PATENT SPECIFICATION

(11) **EP 3 738 191 B1**
(45) Date of publication and mention of the grant of the patent: **29.12.2021**
(21) Application number: 18700555.8
(22) Date of filing: 11.01.2018
(51) Int. Cl.: H02K 1/18, H02K 5/04, H02K 5/24

(54) **AN ELECTRIC MACHINE**
EINE ELEKTRISCHE MASCHINE
UNE MACHINE ÉLECTRIQUE

(43) Date of publication of application: 18.11.2020
(73) Proprietor: ABB Schweiz AG, 5400 Baden (CH)
(72) Inventor: ROIVAINEN, Janne, 00380 Helsinki (FI); HAVA, Panu, 02230 Espoo (FI)
(74) Representative: Kolster Oy Ab
(86) International application number: PCT/EP2018/050650
(87) International publication number: WO 2019/137610

(56) References cited:
- WO-A1-03/023941
- DE-U1- 9 200 502
- US-A- 3 375 382
- US-A- 3 519 857

## Description

### FIELD

The invention relates to an arrangement in an electric machine comprising a stator core and a stator frame.

### BACKGROUND

Electric machines are subject to vibrations causing stresses on the equipment and on the joints in the electric machine. A common vibration problem of a 2-pole induction machine is known as twice-line frequency vibration. This vibration problem occurs when the twice-line frequency vibration from the stator coincides with a natural frequency of the machine. The vibration levels measured from the machine frame or from the end shields may exceed accepted levels defined in relevant standards.

There are different prior art methods for preventing twice-line frequency vibration. One possibility is to make the stator yoke thicker. This will result in an increase in the natural frequency of the stator core and in a decrease of the vibration of the stator core. Another possibility is to stiffen the motor frame and the end shields. This will also increase the natural frequency of the stator. Resonance between the natural frequency and the excitation may thus be avoided. Still another possibility is to limit the electro-magnetic forces of the stator through the electric design of the machine. Still another possibility is to support the stator core at the stator frame so that twice-line frequency vibration is minimized. The basic idea in the support between the stator core and the stator frame is to control the force transmission and coupling of vibration modes between the stator core and the stator frame.

These methods for limiting twice-line vibration in an electric machine may limit the performance of the electric machine as more material is required to stiffen the structure or the electric design is otherwise limited.

US 3 519 857 discloses a stator assembly for a dynamoelectric machine. The cylindrical shell of the frame is provided with radially inwardly extending ribs or bulkheads. Axially extending core bars are provided on the outer surface of the stator core. The stator core is attached to the frame with fasteners extending between the ribs or bulkheads and the core bars. A bolt passes through a locking bushing to a threaded hole in the core bar. A nut is further threaded on the locking bushing. The nut is welded to the rib or bulkhead. There are four fasteners at each end of the stator core and therefore, eight fastening points all together.

### SUMMARY

An object of the present invention is to achieve an improved electric machine.

The invention provides an electric machine according to claim 1.

The electric machine comprises a cylindrical stator core with a longitudinal centre axis and a frame surrounding the stator core. The stator core is attached to the frame through four fastening points, whereby two fastening points are positioned at a first axial end of the stator core on opposite sides of the longitudinal centre axis and two fastening points are positioned at a second opposite axial end of the stator core on opposite sides of the longitudinal centre axis.

The novel fastening arrangement between the stator core and the frame results in a controlled contact between the stator core and the frame. This makes it possible to accurately predict the vibration levels in the electric machine. The absolute vibration levels are also significantly lower compared to prior art fastening arrangements.

The novel fastening arrangement between the stator core and the frame makes it possible to allow harmful natural frequencies of the electric machine within the whole excitation frequency range. There are thus no restrictions in the speed range of the electric machine.

The novel fastening arrangement between the stator core and the frame does not impose any restrictions to the electric design of the electric machine.

The novel fastening arrangement between the stator core and the frame makes it possible to use a simple mechanical design of the electric machine.

The novel fastening arrangement between the stator core and the frame may in principle be used in any kind of electric machines. The fastening arrangement may, however, be used particularly in a 2-pole electric induction machine and more particularly in a 2-pole electric induction motor.

### DRAWINGS

In the following the invention will be described in greater detail by means of preferred embodiments with reference to the attached drawings, in which
Figure 1 shows an exemplary electric machine,
Figure 2 shows an axonometric view of the frame of the invented electric machine,
Figure 3 shows a side view of the frame of the invented electric machine,
Figure 4 shows an end view of the frame of the invented electric machine,
Figure 5 shows a first cross sectional view of the frame of the invented electric machine,
Figure 6 shows a second cross sectional view of the frame of the invented electric machine,
Figure 7 shows a horizontal cross sectional view of the frame of the invented electric machine,
Figure 8 shows the fastening of the stator core to the frame of the invented electric machine,
Figure 9 shows an adapter support of the stator core of the invented electric machine,
Figure 10 shows the vibration in a prior art support arrangement between the stator core and the frame,
Figure 11 shows the vibration in the support arrangement between the stator core and the frame of the invented electric machine.

### DETAILED DESCRIPTION

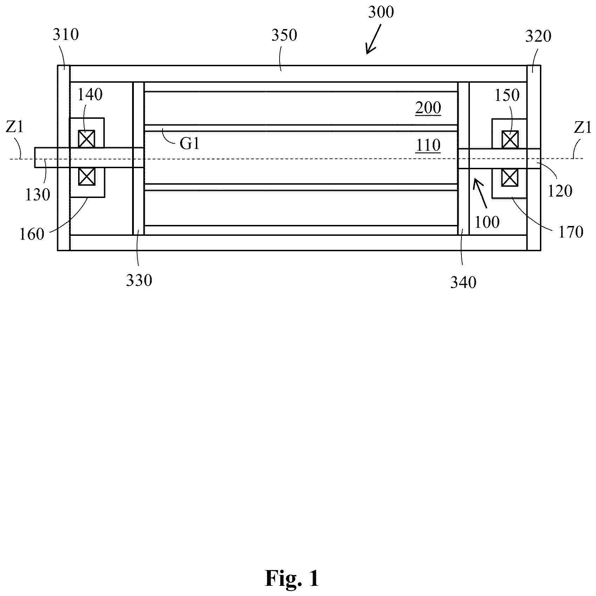

Fig. 1 shows an exemplary electric machine.

The electric machine comprises a longitudinal centre axis Z1-Z1, a cylindrical rotor 100 and a cylindrical stator core 200 surrounding the rotor 100.

There is an air gap G1 between the outer surface of the centre portion 110 of the rotor 100 and the inner surface of the stator core 200.

The rotatable rotor 100 may comprise a centre portion 110 and two end portions 120, 130 at each axial Z1-Z1 end of the centre portion 110. Each end portion 120, 130 of the rotor 100 may be supported through a bearing 140, 150 positioned in a bearing housing 160, 170.

The longitudinal centre axis Z1-Z1 forms a rotational axis of the rotor 100.

The stator core 200 may have a cylindrical shape provided with an inner bore receiving the rotor 100.

The frame 300 may comprise two opposite end shields 310, 320 positioned at each axial end of the frame 300 and a frame structure 350 extending between the end shields 310, 320. The frame 300 may further comprise an intermediate plate 330, 340 at each axial end of the stator core 200.

Each bearing housing 160, 170 may be supported on a respective end shield 310, 320.

The rotor windings and the stator windings are not shown in the figure. There may be one or more windings in the rotor and/or in the stator and/or there may be permanent magnets in the rotor and/or in the stator.

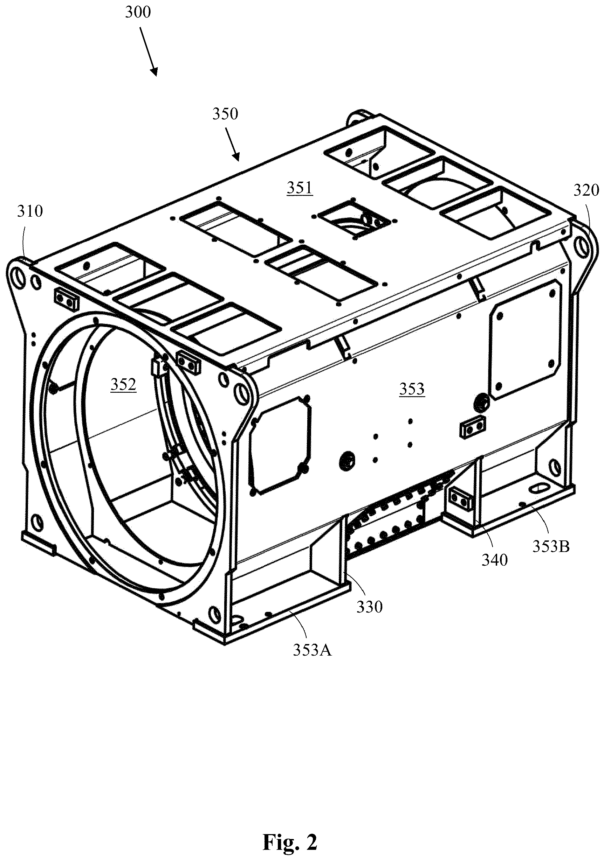

Figure 2 shows an axonometric view of the frame of the invented electric machine.

The frame 300 may comprise two opposite end shields 310, 320 positioned at each axial end of the frame 200. The two opposite end shields 310, 320 are thus positioned at an axial distance from each other. The end shields 310, 320 may be attached to a frame structure 350 extending in the axial direction between the end shields 310, 320. Each end shield 310, 320 may comprise an annular opening through which the stator core 200 and the rotor may be pushed into the frame 300. The frame 300 may further comprise two intermediate plates 330, 340 positioned at each axial end of the stator core 200. The intermediate plates 330, 340 may also comprise an annular opening through which the stator core 200 and the rotor may be pushed into the frame 300. The frame structure 350 between the end shields 310, 320 may comprise an upper plate 351 and two opposite side plates 352, 353. The side plates 352, 353 may comprises foot portions 353A, 353B through which the frame 300 may be attached to a support structure. The upper plate 351 and the side plates 352, 353 may further comprise hatches allowing access to the interior of the frame 300. There may be further intermediate plates in the frame 300 between the end shields 310, 320.

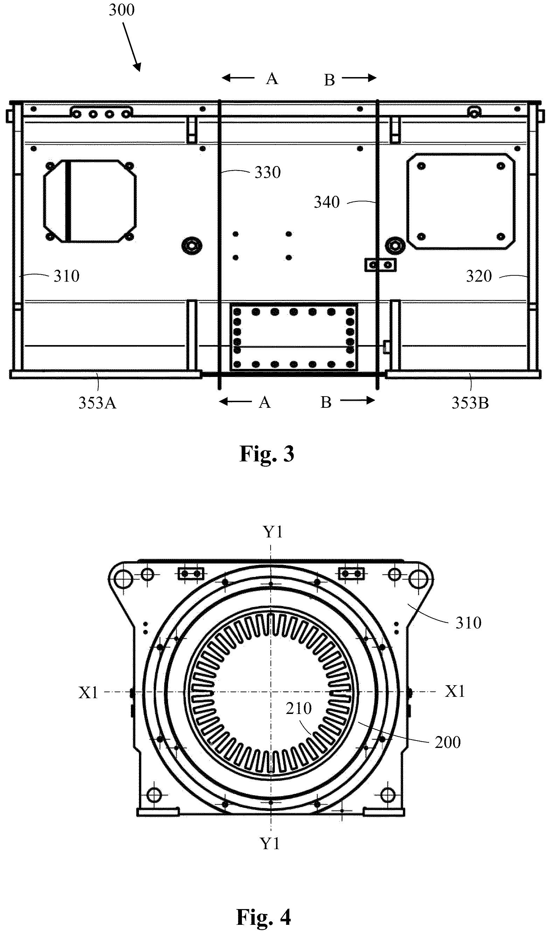

Figure 3 shows a side view of the frame of the invented electric machine, and figure 4 shows an end view of the frame of the invented electric machine.

The side view shows the end shields 310, 320 and the intermediate plates 330, 340 within the frame 300.

The end view shows a horizontal centre plane X1-X1 and a vertical centre plane Y1-Y1 of the stator core 200.

The frame 300 surrounds the annular stator core 300.

The inner surface of the stator core 200 may be provided with slots 210 extending substantially radially outwards from the inner perimeter of the stator core 100. The slots 210 may receive a stator winding.

The stator core 200 may have a laminated structure i.e. it may be composed of annular sheets that are stacked together to form the stator core 200. Each sheet in the stator core 200 may be made of sectors, whereby the sectors may be attached to each other in order to form a closed perimeter. The stator core 200 may have a cylindrical form.

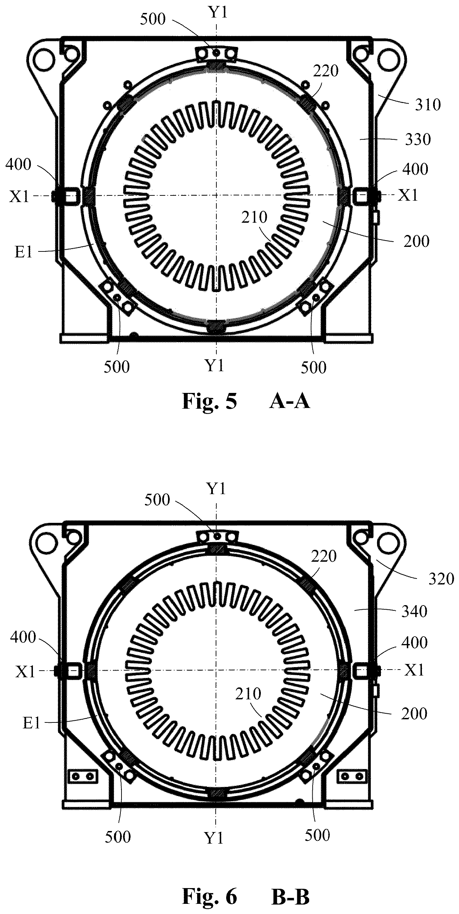

Figure 5 shows a first cross sectional view of the frame of the invented electric machine in the direction of arrows A-A in figure 3 and figure 6 shows a second cross sectional view of the frame in the direction of arrows B-B in figure 3.

Figure 5 shows the first stator end shield 330 of the invented electric machine and figure 6 shows the second stator end shield 340 of the invented electric machine positioned within the frame 300.

The stator core 200 may be provided with back beams 220 extending in the axial direction along the outer surface of the stator core 200. The back beams 220 may be attached by welding or by a compression joint or by a form lock to the outer surface of the stator core 200. The back beams 220 may be equally distributed along the perimeter of the stator core 200. The stator core 200 may comprise eight back beams 220 equally distributed along the perimeter of the stator core 200.

There may be a clearance E1 between the outer surface of the stator core 200 and the inner surface of the frame 330.

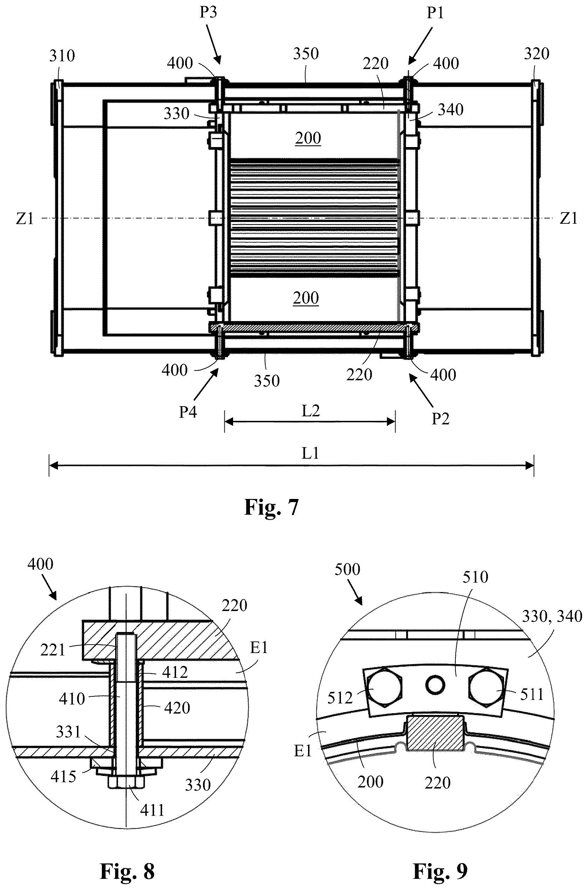

The stator core 200 may be supported with adapter supports 500 at the intermediate plates 330, 340 of the frame 300. The radial outer surface of the back beam 220 may be supported against the radial inner surface of the adapter support 500. There may be three adapter supports 500 at each end of the stator core 200. The adapter supports 500 may be distributed along the circumference of the stator core 200. A first adapter support 500 may be positioned in the uppermost point of the circumference of the stator core 200. The second and the third adapter supports 500 may be positioned in a respective lower quarter of the circumference of the stator core 200. The first adapter support 500 may thus be positioned in the vertical centre plane Y1-Y1 of the stator core 200. The second and the third adapter part 510 may be positioned symmetrically on opposite sides of the vertical centre plane Y1-Y1 of the stator core 200. The adapter supports 500 are used to position the stator core 200 in the correct position within the frame 300 before the stator core 200 is attached to the frame 300. The adapter supports 500 are removed when the stator core 200 has been attached to the frame 300. The adapter supports 500 will be described in connection with figure 9.

The stator core 200 may be attached with a fastening arrangement 400 to the frame 330. The fastening arrangement 400 may be located on the horizontal centre plane X1-X1 of the stator core 200. The fastening arrangement 400 will be described in connection with figures 7 and 8.

Figure 7 shows a horizontal cross sectional view of the frame of the invented electric machine.

The figure shows a longitudinal centre axis Z1-Z1 of the stator core 200.

The axial length L2 of the stator core 200 is only a portion of the axial length L1 of the frame 300. The bearing housings 160, 170 shown in figure 1 may be positioned within the frame 300 at both ends of the stator core 200. The first bearing housing 160 may be positioned between the first end shield 310 and the first intermediate plate 330. The second bearing housing 170 may be positioned between the second end shield 320 and the second intermediate plate 340.

According to the invention, the tator core 200 is attached to the frame 300 through four fastening points P1, P2, P3, P4. There are two fastening points P1, P2 at a first axial end of the stator core 200 i.e. in connection with the first intermediate plate 330 of the frame 300 and two fastening points P3, P4 at a second opposite axial end of the stator core 200 i.e. in connection with the second intermediate plate 340 of the frame 300. The first two fastening points P1, P2 are positioned on opposite sides of the longitudinal centre axis Z1-Z1 of the stator core 200. The second two fastening points P3, P4 are positioned on opposite sides of the longitudinal centre axis Z1-Z1 of the stator core 200.

According to the invention, each of the four fastening points P1, P2, P3, P4 is located on a horizontal plane X1-X1. According to an example, the horizontal plane X1-X1 may be a horizontal centre plane X1-X1 of the stator core 200. The horizontal centre plane X1-X1 may pass through the longitudinal centre axis Z1-Z1 of the stator core 200 i.e. through the rotational axis Z1-Z1 of the rotor 100. The fastening points P1, P2, P3, P4 may be positioned in the corners of a rectangle. One side of the rectangle may extend substantially along the first intermediate plate 330 and a second opposite side of the rectangle may extend substantially along the second intermediate plate 340. The two remaining opposite sides of the rectangle extend substantially along a respective longitudinal side of the frame 300. The longitudinal sides of the frame 300 may extend in the axial direction Z1-Z1 of the stator core 200.

According to the invention, the four fastening points P1, P2, P3, P4 are positioned exactly in a horizontal plane X1-X1. According to an example, a small deviation of one or several of the fastening points P1, P2, P3, P4 from the exact position is normally allowed without departing from the invention. The small deviation might be due e.g. to manufacturing tolerances. The four fastening points P1, P2, P3, P4 may thus be positioned substantially in a horizontal plane X1-X1.

According to the invention, each of the four fastening points P1, P2, P3, P4 comprises a fastening arrangement 400 attaching the stator core 200 to the frame 300.

According to the invention, there are only four fastening points P1, P2, P3, P4 for fastening the stator core 200 to the frame 300. The stator core 200 is in contact with the frame 300 only through the four fastening points P1, P2, P3, P4.

Figure 8 shows the fastening of the stator core to the frame of the invented electric machine.

According to the invention, the fastening arrangement 400 comprises a bolt 410 passing through a hole 331 in the frame 330 and further through a bushing 420 to a threading 221 in the back beam 220. According to an example, the bushing 420 may extend between the frame 330 and the back beam 220. The bushing 420 may thus determine the clearance E1 between the back beam 220 and the frame 330. The outer end of the bolt 410 may comprise an outer threading 412 engaging with the inner threading 221 in the hole in the back beam 220. Washers 415 may be used under the head 411 of the bolt 410.

Figure 9 shows the adapter support of the stator core of the invented electric machine.

According to an example, each adapter support 500 may comprise an adapter plate 510 which is attached with bolts 511, 512 to a respective intermediate plate 330, 340 in the frame 300. A radially outer surface of the back beam 220 may be seated against a radially inner surface of the adapter plate 510. The adapter plates 510 position the stator core 200 in a correct position within the frame 300 before the stator core 200 is attached to the frame 300. There are hatches in the upper plate 351 and in the side plates 352, 353 of the frame 300 through which the adapter plates 510 may be removed when the stator core 200 has been attached to the frame 300 through the four fastening points P1, P2, P3, P4.

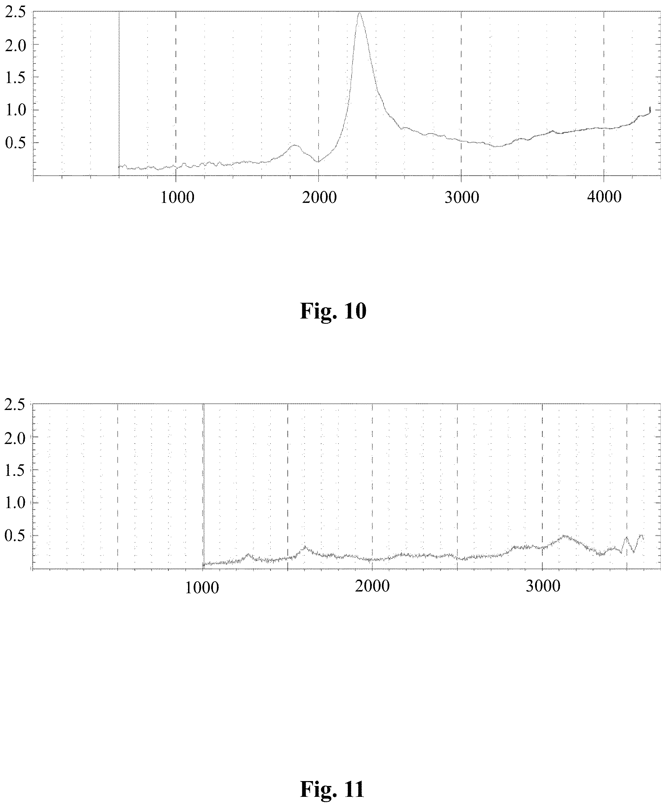

Figure 10 shows the vibration in a prior art support arrangement between the stator core and the frame.

The vertical axis shows the amplitude of the vibration in mm/s (root-mean-square value) and the horizontal axis shows the rotational speed of the electric machine. The vibration is measured in the horizontal direction from the bearing housing. The figure shows that there is a peak of about 2.5 mm/s in the vibration at a rotational speed of about 2300 rpm.

Figure 11 shows the vibration in the support arrangement between the stator core and the frame of the invented electric machine.

The vertical axis shows the amplitude of the vibration in mm/s (root-mean-square value) and the horizontal axis shows the rotational speed of the electric machine. The vibration is measured in the horizontal direction from the bearing housing. The figure shows that the peak of about 2.5 mm/s in the vibration at a rotational speed of about 2300 rpm has been eliminated with the inventive support arrangement between the stator core 200 and the frame 300.

Figures 10 and 11 are measured from a two-pole induction motor.

A compression joint between two parts is achieved according to the invention by using a bolt and a nut as fastening means. The bolt and the nut form a compression joint between the parts that are to be attached together. The compression joint could also be called a threaded joint when a bolt and a nut are used as fastening means. A compression joint could also be achieved e.g. with a heated rivet, which forms a compression joint between the parts that are to be attached together when the rivet cools down.

It will be obvious to a person skilled in the art that, as the technology advances, the inventive concept can be implemented in various ways. Hereby, the invention and its embodiments are not limited to the examples described above but may vary within the scope of the appended claims.

## Claims

1. An electric machine comprising a cylindrical stator core (200) with a longitudinal centre axis (Z1-Z1) and a frame (300) surrounding the stator core (200),
the stator core (200) being attached to the frame (300) only through four fastening points (P1, P2, P3, P4),
two fastening points (P1, P2) being positioned at a first axial end of the stator core (200) on opposite sides of the longitudinal centre axis (Z1-Z1) and two fastening points (P3, P4) being positioned at a second opposite axial end of the stator core (200) on opposite sides of the longitudinal centre axis (Z1-Z1),
the stator core (200) being in contact with the frame (300) only through the four fastening points (P1, P2, P3, P4), the four fastening points (P1, P2, P3, P4) being positioned in a horizontal plane (X1-X1),
the stator core (200) being provided with back beams (220) extending in an axial direction between the axial ends of the stator core (200) and being attached to an outer surface of the stator core (200),
the attachment between the stator core (200) and the frame (300) being arranged, in each fastening point (P1, P2, P3, P4), with a bolt (410) extending in the horizontal direction transversely in relation to the longitudinal centre axis (Z1-Z1) from the frame (300) to the back beam (220).

2. An electric machine according to claim 1, **characterized in that** the horizontal plane (X1-X1) is a horizontal centre plane (X1-X1) of the stator core (200).

3. An electric machine according to claim 2, **characterized in that** the horizontal centre plane (X1-X1) of the stator core (200) passes through the longitudinal centre axis (Z1-Z1) of the electric machine.

4. An electric machine according to any one of claims 1 to 3, **characterized in that** the frame (300) comprises two opposite end shields (310, 320) positioned at an axial distance from each other, a frame structure (350) extending between the end shields (310, 320), and two opposite intermediate plates (330, 340) positioned within the frame (300) at the axial ends of the stator core (200), whereby the fastening points (P1, P2, P3, P4) are arranged in connection with the intermediate plates (330, 340).

5. An electric machine according to claim 4, **characterized in that** each fastening point (P1, P2, P3, P4) comprises a fastening arrangement (400) being formed of a bolt (410) and a bushing (420) extending between side plates (352, 353) in the frame structure (350) and a back beam (220), the bolt (410) passing through the respective side plate (352, 353) and the bushing (420) to the back beam (220), whereby the stator core (200) becomes attached to the frame (300) through said bolts (410).

## Patentansprüche

1. Elektrische Maschine, umfassend einen zylindrischen Ständerkern (200) mit einer Längsmittelachse (Z1-Z1) und einem den Ständerkern (200) umgebenden Rahmen (300),
wobei der Ständerkern (200) an dem Rahmen (300) nur über vier Befestigungspunkte (P1, P2, P3, P4) angebracht ist,
wobei zwei Befestigungspunkte (P1, P2) an einem ersten axialen Ende des Ständerkerns (200) auf gegenüberliegenden Seiten der Längsmittelachse (Z1-Z1) positioniert sind und zwei Befestigungspunkte (P3, P4) an einem zweiten, gegenüberliegenden axialen Ende des Ständerkerns (200) auf gegenüberliegenden Seiten der Längsmittelachse (Z1-Z1) positioniert sind,
wobei der Ständerkern (200) in Kontakt mit dem Rahmen (300) nur über die vier Befestigungspunkte (P1, P2, P3, P4) ist, wobei die vier Befestigungspunkte (P1, P2, P3, P4) in einer horizontalen Ebene (X1-X1) positioniert sind,
wobei der Ständerkern (200) mit hinteren Trägern (220) versehen ist, die sich in einer axialen Richtung zwischen den axialen Enden des Ständerkerns (200) erstrecken und an einer Außenfläche des Ständerkerns (200) angebracht sind,
wobei die Anbringung zwischen dem Ständerkern (200) und dem Rahmen (300) in jedem Befestigungspunkt (P1, P2, P3, P4) mit einem Bolzen (410) angeordnet ist, der sich in der horizontalen Richtung quer in Bezug auf die Längsmittelachse (Z1-Z1) von dem Rahmen (300) zu dem hinteren Träger (220) erstreckt.

2. Elektrische Maschine nach Anspruch 1, **dadurch gekennzeichnet, dass** die horizontale Ebene (X1-X1) eine horizontale Mittelebene (X1-X1) des Ständerkerns (200) ist.

3. Elektrische Maschine nach Anspruch 2, **dadurch gekennzeichnet, dass** die horizontale Mittelebene (X1-X1) des Ständerkerns (200) durch die Längsmittelachse (Z1-Z1) der elektrischen Maschine verläuft.

4. Elektrische Maschine nach einem der Ansprüche 1 bis 3, **dadurch gekennzeichnet, dass** der Rahmen (300) zwei gegenüberliegende Lagerschilde (310, 320) umfasst, die in einem axialen Abstand voneinander positioniert sind, wobei sich eine Rahmenstruktur (350) zwischen den Lagerschilden (310, 320) erstreckt und zwei gegenüberliegende Zwischenplatten (330, 340) in dem Rahmen (300) an den axialen Enden des Ständerkerns (200) positioniert sind, wobei die Befestigungspunkte (P1, P2, P3, P4) in Verbindung mit den Zwischenplatten (330, 340) angeordnet sind.

5. Elektrische Maschine nach Anspruch 4, **dadurch gekennzeichnet, dass** jeder Befestigungspunkt (P1, P2, P3, P4) eine Befestigungsanordnung (400) umfasst, die aus einem Bolzen (410) und einer Durchführung (420) besteht, die sich zwischen Seitenplatten (352, 353) in der Rahmenstruktur (350) und einem hinteren Träger (220) erstreckt, wobei der Bolzen (410) durch die jeweilige Seitenplatte (352, 353) und die Durchführung (420) zu dem hinteren Träger (220) verläuft, wodurch der Ständerkern (200) an dem Rahmen (300) über die Bolzen (410) angebracht wird.

## Revendications

1. Machine électrique comprenant un noyau de stator cylindrique (200) avec un axe central longitudinal (Z1-Z1) et un châssis (300) entourant le noyau de stator (200),
le noyau de stator (200) étant fixé au châssis (300) uniquement à travers quatre points de fixation (P1, P2, P3, P4),
deux points de fixation (P1, P2) étant positionnés au niveau d'une première extrémité axiale du noyau de stator (200) sur des côtés opposés de l'axe central longitudinal (Z1-Z1) et deux points de fixation (P3, P4) étant positionnés au niveau d'une deuxième extrémité axiale opposée du noyau de stator (200) sur des côtés opposés de l'axe central longitudinal (Z1-Z1),
le noyau de stator (200) étant en contact avec le châssis (300) uniquement à travers les quatre points de fixation (P1, P2, P3, P4), les quatre points de fixation (P1, P2, P3, P4) étant positionnés dans un plan horizontal (X1-X1),
le noyau de stator (200) étant pourvu de poutres arrière (220) s'étendant dans une direction axiale entre les extrémités axiales du noyau de stator (200) et étant fixées à une surface externe du noyau de stator (200),
la fixation entre le noyau de stator (200) et le châssis (300) étant agencée, dans chaque point de fixation (P1, P2, P3, P4), avec un boulon (410) s'étendant dans la direction horizontale de manière transversale par rapport à l'axe central longitudinal (Z1-Z1) du châssis (300) à la poutre arrière (220).

2. Machine électrique selon la revendication 1, **caractérisée en ce que** le plan horizontal (X1-X1) est un plan central horizontal (X1-X1) du noyau de stator (200) .

3. Machine électrique selon la revendication 2, **caractérisée en ce que** le plan central horizontal (X1-X1) du noyau de stator (200) traverse l'axe central longitudinal (Z1-Z1) de la machine électrique.

4. Machine électrique selon l'une quelconque des revendications 1 à 3, **caractérisée en ce que** le châssis (300) comprend deux protections d'extrémité opposées (310, 320) positionnées à une distance axiale l'une de l'autre, une structure de châssis (350) s'étendant entre les protections d'extrémité (310, 320), et deux plaques intermédiaires opposées (330, 340) positionnées à l'intérieur du châssis (300) au niveau des extrémités axiales du noyau de stator (200), moyennant quoi les points de fixation (P1, P2, P3, P4) sont agencés en relation avec les plaques intermédiaires (330, 340).

5. Machine électrique selon la revendication 4, **caractérisée en ce que** chaque point de fixation (P1, P2, P3, P4) comprend un agencement de fixation (400) étant formé d'un boulon (410) et d'une bague (420) s'étendant entre des plaques latérales (352, 353) dans la structure de châssis (350) et une poutre arrière (220), le boulon (410) traversant la plaque latérale respective (352, 353) et la bague (420) vers la poutre arrière (220), moyennant quoi le noyau de stator (200) devient fixé au châssis (300) à travers lesdits boulons (410).
